(19) **Europäisches Patentamt / European Patent Office / Office européen des brevets**

(11) **EP 3 347 702 B1**

(12) # EUROPÄISCHE PATENTSCHRIFT

(45) Veröffentlichungstag und Bekanntmachung des Hinweises auf die Patenterteilung:
**02.10.2024 Patentblatt 2024/40**

(21) Anmeldenummer: **16762757.9**

(22) Anmeldetag: **31.08.2016**

(51) Internationale Patentklassifikation (IPC):
**G01N 21/55** (2014.01) **G01N 21/59** (2006.01)

(52) Gemeinsame Patentklassifikation (CPC):
**G01N 19/04; G01N 21/55; G01N 21/59;**
G01N 2021/1765

(86) Internationale Anmeldenummer:
**PCT/EP2016/070469**

(87) Internationale Veröffentlichungsnummer:
**WO 2017/042064 (16.03.2017 Gazette 2017/11)**

(54) **ANORDNUNG ZUR BESTIMMUNG DER ERREICHBAREN HAFTFESTIGKEIT VOR AUSBILDUNG EINER STOFFSCHLÜSSIGEN VERBINDUNG AN EINER OBERFLÄCHE EINES FÜGEPARTNERS**

ARRANGEMENT FOR DETERMINING BEFORE ASSEMBLY THE ACHIEVABLE BONDING STRENGTH AT A SURFACE OF A MATING PART

DISPOSITIF POUR DÉTERMINER LA FORCE DE LIAISON SUSCEPTIBLE D'ÊTRE ATTEINTE AVANT LA FORMATION D'UNE LIAISON DE MATIÈRE AVEC LA SURFACE D'UN PARTENAIRE D'ASSEMBLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2015 DE 102015217091**

(43) Veröffentlichungstag der Anmeldung:
**18.07.2018 Patentblatt 2018/29**

(73) Patentinhaber: **Fraunhofer-Gesellschaft zur Förderung
der angewandten Forschung e.V.
80686 München (DE)**

(72) Erfinder:
• **GRUBER, Florian**
**01127 Dresden (DE)**
• **GRÄHLERT, Wulf**
**01277 Dresden (DE)**
• **WOLLMANN, Philipp**
**01189 Dresden (DE)**

(74) Vertreter: **Pfenning, Meinig & Partner mbB
Patent- und Rechtsanwälte
An der Frauenkirche 20
01067 Dresden (DE)**

(56) Entgegenhaltungen:
EP-A2- 2 138 830   WO-A1-2004/042373
WO-A1-2011/047016   JP-A- 2009 244 003
US-A1- 2004 073 398   US-A1- 2004 149 026

• P. WOLLMANN ET AL: "Non-destructive screening, 100 % inspection and characterization by hyperspectral imaging", 26 April 2016 (2016-04-26), XP055590275, Retrieved from the Internet <URL:https://web.archive.org/web/20160426142 301if_/http://www.iws.fraunhofer.de/content/da m/iws/de/documents/projekte/cvd/prozess-moni toring/imanto_hyperspectral-imaging_brochure. pdf> [retrieved on 20190520]
• P. WOLLMANN ET AL: "Spektroskopie: Hyperspektrales Imaging für die Schichtanalytik", 25 May 2015 (2015-05-25), XP055590286, Retrieved from the Internet <URL:https://www.git-labor.de> [retrieved on 20190520]
• "MEASUREMENT OF ADHESION IN EXTRUSION COATINGS USING ON-LINE TECHNIQUES", RESEARCH DISCLOSURE, MASON PUBLICATIONS, HAMPSHIRE, GB, no. 301, 1 May 1989 (1989-05-01), pages 372, XP000052554, ISSN: 0374-4353

**EP 3 347 702 B1**

**Beschreibung**

Die Erfindung betrifft eine Anordnung zur Bestimmung der erreichbaren Haftfestigkeit vor Ausbildung einer stoffschlüssigen Verbindung an einer Oberfläche eines Fügepartners. Fügepartner können dabei stoffschlüssig durch Kleben, Schweißen oder Löten miteinander verbunden werden. Dabei können ebenso Fügepartner miteinander verbunden sein, die beide aus dem gleichen Werkstoff, insbesondere Kunststoffe, Metalle oder Keramiken oder von denen mindestens ein Fügepartner aus einem Polymer gebildet ist. Es können so auch Fügepartner aus unterschiedlichen Werkstoffen untersucht werden, bevor die stoffschlüssige Verbindung hergestellt wird. Mit der Erfindung kann aber auch die erreichbare Haftfestigkeit einer Beschichtung, die auf der Oberfläche eines Bauteils, das nachfolgend ebenfalls als Fügepartner bezeichnet werden soll, bestimmt werden, bevor die Beschichtung ausgebildet wird.

Dabei kann man unter Haftfestigkeit die erreichbare Adhäsionswirkung verstehen.

Bisher ist es üblich, solche Haftfestigkeiten bevorzugt mittels Keiltest nach DIN 65448, aber auch mittels Abzugstest nach ISO 4624, Winkelschälversuch nach DIN 53282, Zugfestigkeit nach DIN 53288, Rollenschälversuch nach DIN 53289 und weiteren Prüfverfahren zu prüfen. Entsprechende Proben können damit aber erst nach der Ausbildung der stoffschlüssigen Verbindung und deren Verfestigung geprüft werden, was ebenso wie die eigentliche Prüfung mehrere Tage dauern kann. Dadurch ist eine Prüfung unmittelbar während der Fertigung nicht möglich. Außerdem handelt es sich um Verfahren, bei dem die Proben zerstört werden müssen.

Die Haftfestigkeit von Beschichtungen wird üblicherweise mittels Tape-Test ermittelt. Dieser kann erst nach der Ausbildung der Beschichtung durchgeführt werden. Eine Vorhersage ist daher nicht möglich. Außerdem wird die Beschichtung zerstört und das jeweilige Substrat zumindest beeinträchtigt.

So ist aus EP 2 138 830 A2 ein Verfahren zur Bestimmung des Einflusses von UV-Strahlung an Materialien mittels IR-Spektroskopie bekannt.

Es ist daher Aufgabe der Erfindung, Möglichkeiten für die zerstörungsfreie Bestimmung der erreichbaren Haftfestigkeit vor Ausbildung einer stoffschlüssigen Verbindung an einer Oberfläche eines Fügepartners anzugeben, die in deutlich verkürzter Zeit zu Ergebnissen mit ausreichender Genauigkeit führen und somit sogar für eine inline Messung in Fertigungsprozessen einsetzbar sind.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäße Anordnung zur Bestimmung der erreichbaren Haftfestigkeit vor Ausbildung einer stoffschlüssigen Verbindung an der Oberfläche eines Fügepartners weist mehrere Detektoren auf, die zur ortsaufgelösten spektralen Analyse elektromagnetischer Strahlung innerhalb eines Wellenlängenintervalls ausgebildet sind. Diese Detektoren sind dazu in einer Reihen- oder einer Reihen- und Spaltenanordnung angeordnet. Die Detektoren sind mit einer elektronischen Auswerteeinheit verbunden und so angeordnet, dass von einer breitbandigen Strahlungsquelle emittierte elektromagnetische Strahlung entweder nach einer Reflexion an der Oberfläche eines der Fügepartner, einer auf der Oberfläche eines Fügepartners ausgebildeten Schicht, mit der die stoffschlüssige Verbindung ausgebildet ist, und/oder nach dem Durchstrahlen von für die elektromagnetische Strahlung transparenten Fügepartnern auf die Detektoren auftrifft. Dabei erfolgt die Bestrahlung so, dass auf einer Fläche, von der die elektromagnetische Strahlung reflektiert oder durch die Fläche transmittiert wird, eine homogene Intensität der elektromagnetischen Strahlung eingehalten ist. Die jeweils gleichzeitig zu detektierende Fläche soll also mit homogener Intensität bestrahlt werden. Bei der breitbandigen Bestrahlung werden elektromagnetische Wellen, die innerhalb eines Wellenlängenintervalls liegen, auf die jeweilige Oberfläche eines der Fügepartner gerichtet, die untersucht werden soll.

Der Fügepartner oder eine auf der Oberfläche ausgebildete Beschichtung, auf dessen/deren Oberfläche die elektromagnetische Strahlung gerichtet ist, ist aus einem Werkstoff gebildet, der die jeweilige elektromagnetische Strahlung nicht 100 %-ig absorbiert und so eine mindestens 2%-ige Transmission und/oder Reflexion der elektromagnetischen Strahlung möglich ist/sind.

Die elektronische Auswerteeinheit ist so ausgebildet, dass die durch die Detektoren orts- und wellenlängenaufgelöst erfassten Messsignale innerhalb eines Wellenlängenintervalls einem bestimmten Wellenlängenbereich sowie innerhalb eines vorgebbaren Teilbereiches der bestrahlten Oberfläche einem einzelnen Ortspunkt jeweils zuordenbar sind.

Die Erfassung und Auswertung kann dabei auf der gesamten Oberfläche der zum stoffschlüssigen Fügen genutzten Oberfläche des Fügepartners oder aller Fügepartner erfolgen. Es besteht aber auch die Möglichkeit eine Bestimmung an einer oder mehreren Teilflächen durchzuführen.

Die Gesamtheit der an allen Ortspunkten der jeweiligen bestrahlten Fläche wellenlängenaufgelöst erfassten Intensitäten bildet eine dreidimensionale Datenstruktur, bestehend aus einer wellenlängenaufgelösten und zwei ortsaufgelösten Dimensionen, ab (Hypercube).

Danach soll für alle wellenlängenaufgelöst erfassten Messsignale des Teilbereiches eine Datenreduzierung durchführbar sein, bei der aussagekräftige Merkmale selektiert werden und der daraus resultierende Merkmalssatz unter Verwendung eines in einem elektronischen Speicher abgelegten Regressionsmodells, das anhand von Merkmalssätzen ermittelt wurde, die vorher an Proben ermittelt worden sind, deren Haftfestigkeiten mit einem anderen Messverfahren, das bevorzugt eine höhere Messgenauigkeit aufweist, ermittelt wurden, einem Regressionsverfahren unterzogen wird, wodurch eine Aussage über die Haftfestigkeit des betreffenden Teilbereiches der Fügeverbindung ableitbar ist, wobei mindestens ein Teilbereich zur Bewertung der Haftfestigkeit herangezogen wird.

Eine mit der Erfindung untersuchte stoffschlüssige Verbindung von Fügepartnern sollte zur gleichen Klasse, die einen vergleichbaren Aufbau oder Zusammensetzung aufweisen sollte, wie die vorab mit einem anderen Messverfahren untersucht worden sind, gehören.

Der funktionale Zusammenhang zwischen adäquat selektierten Merkmalssätzen von stoffschlüssig miteinander verbundenen Fügepartnern und deren Haftfestigkeiten, die mit einem anderen Messverfahren ermittelt wurden, kann beispielsweise mittels linearer oder nicht-linearer Regression, einem Partial-Least-Square-Algorithmus (PLS), einem neuronalen Netzwerk, einer Kombination von mindestens zwei dieser Verfahren oder anderen Regressionsverfahren (Regressionsmodell) bestimmt werden können.

In dem elektronischen Speicher soll also das Regressionsmodell, das anhand der mit der erfindungsgemäßen Anordnung erfassten Datensätze von Proben, die der Datenreduktion und Merkmalsextraktion unterzogen wurden und deren - mit einem anderen Messverfahren ermittelten - Haftfestigkeiten, erstellt wurde, enthalten sein. Anhand eines im elektronischen Speicher gespeicherten Regressionsmodells, kann aus den mit der erfindungsgemäßen Anordnung ermittelten Datensätzen die Haftfestigkeit einer vergleichbar untersuchten Probe dergleichen Probenklasse mit vergleichbarem Aufbau bestimmt werden.

Die elektronische Auswerteeinheit nimmt die Datenreduzierung und Merkmalsextraktion der mit der erfindungsgemäßen Anordnung ermittelten Datensätze vor. Dabei kann zunächst eine Auswertung der spektralen Informationen und anschließend der Ortsinformationen erfolgen. Möglich ist auch eine dazu umgekehrte Reihenfolge oder eine beliebige Kombination von mehr als zwei einzelnen Schritten zur Datenreduzierung und Merkmalsextraktion.

Die Datenreduzierung und Merkmalsextraktion kann mittels Hauptkomponentenanalyse (PCA), Parametrisierung von Texturinformationen, Mittelwertbildung und/oder Bestimmung der Standardabweichung und Kombinationen davon erfolgen.

Im Falle der Verwendung der Hauptkomponentenanalyse werden die n Intensitäten der Wellenlängen (Spektren) aller Ortspunkte durch eine Koordinatentransformation in ein neues orthogonales Koordinatensystem - dem Hauptkomponentenraum - überführt, in dem die ursprünglichen Daten maximale Varianz besitzen, und wobei n die Anzahl der gemessenen Wellenlängen repräsentiert.

Die Koordinatentransformation errechnet sich durch die Bestimmung der $n$ Eigenvektoren (Hauptkomponenten) und der dazugehörigen n Eigenwerte der Covarianzmatrix des Datensatzes der gemessenen Teilfläche. Je größer der n-te Eigenwert ist, umso mehr beschreibt die entsprechende n-te Hauptkomponente die ursprünglich Varianz, d.h. der Eigenvektor mit dem größten Eigenwert ist die 1. Hauptkomponente des Datensatzes und beschreibt den Großteil der ursprünglichen Varianz des Datensatzes. Der Eigenvektor mit dem niedrigsten Eigenwert ist die n-te Hauptkomponente des Datensatzes und beschreibt keine relevanten Eigenschaften des Datensatzes. Es wird nur eine bestimmte Anzahl Hauptkomponenten berücksichtigt - oft die ersten drei bis sechs, die bereits eine hinreichende Beschreibung - beispielsweise > 95 % - der ursprünglichen Varianz des Datensatzes gewährleisten. Die Anzahl der zu berücksichtigenden Hauptkomponenten - und somit die Dimensionalität des Hauptkomponentenraumes - kann Kriterien-gestützt beispielsweise anhand des Anteils an der Gesamtvarianz oder eines Scree-Tests gewählt werden.

Die Koordinaten der Spektren im neu aufgespannten Hauptkomponentenraum sind die sogenannten Score-Werte (Punktzahl), welche hinreichend den entsprechenden Ortspunkt charakterisieren.

Mit der elektronischen Auswerteeinheit kann vorteilhaft die Datenreduktion und Merkmalsextraktion so erfolgen, dass die erfindungsgemäß erfassten Daten auf gleichem Wege wie die Daten der Proben, anhand derer bekannten Haftfestigkeiten das Regressionsmodell erstellt wurde, ausgewertet werden. Anhand des erfindungsgemäß erfassten Datensatzes, der orts- und wellenlängenaufgelöst erfassten Intensitäten der elektromagnetischen Strahlung, wird anschließend unter Verwendung des Regressionsmodells die Haftfestigkeit der Probe bestimmt.

Bei der Auswertung der erfindungsgemäß erfassten Daten kann bevorzugt wie folgt vorgegangen werden:

Variante a) Mit einer Hauptkomponentenanalyse der spektralen Informationen aller Ortspunkte der Teilfläche werden bevorzugt die ersten sechs Hauptkomponenten einschließlich der Score-Werte ermittelt. Da die erfindungsgemäß erfassten Daten alle Ortspunkte einer untersuchten Fläche repräsentieren, kann die flächige Verteilung der Scorewerte pro Hauptkomponente angegeben werden. Die Quantifizierung der unterschiedlichen flächigen Verteilung der Scorewerte erfolgt dabei durch verschiedene statistische Parameter, die anhand aller Scorewerte einer Hauptkomponente der jeweiligen Teilfläche bestimmt werden. Insbesondere sind dies die Varianz, der Interquantilabstand oder die mittlere absolute Abweichung. Dieses Vorgehen kann für alle Hauptkomponenten angewendet werden. Die Bestimmung der Haftfestigkeit erfolgt durch die elektronische Auswerteeinheit auf Grundlage eines Regressionsmodells, wie z. B. ein Partial-Least-Square Regressionsmodell (PLS), wobei die Parameter ggf. einer weiteren vorherigen Merkmalsextraktion, bevorzugt über eine weitere Hauptkomponentenanalyse (PCA)- unterworfen wurden.

Das dabei verwendete Regressionsmodell (hier PLS) wurde vorher anhand von Proben der gleichen Probenklasse mit vergleichbarem Aufbau, deren Haftfestigkeiten mit einem anderen Messverfahren bestimmt wurden, ermittelt, wobei alle Schritte der Merkmalsextraktion analog dem oben beschriebenen Verfahren durchgeführt wurden.

Variante b) Über eine Hauptkomponentenanalyse der spektralen Information aller erfassten Ortspunkte der jeweiligen untersuchten Teilfläche wird eine oder mehrere Hauptkomponente(n), insbesondere die Score-Werte der Ortspunkte pro Hauptkomponente berechnet, die über die Probe flächig verteilt angegeben werden können. Die Ortspunkte können dabei durch verschiedene Parameter der Scorewerte beschrieben werden und als bildhafte Darstellung wiedergegeben werden. Neben dem eigentlichen Score-Wert kann dies auch insbesondere durch die Parameter, die sich aus einer Texturanalyse der ortsaufgelösten Verteilung der Score-Werte ergeben, erreicht werden. Dafür wird bevorzugt eine diskrete Wavelet-Transformation (DWT) eingesetzt, wobei beispielsweise das ‚Sym2'-Wavelet zur Durchführung der Berechnungen eingesetzt wird, und eine anschließende Berechnung weiterer Parameter, z.B. der Energie-Signatur (Quadratsumme) der Wavelet-Parameter, durchgeführt wird. Für die weitere Merkmalsextraktion und somit zur Bestimmung des Merkmals "Haftfestigkeit" der Teilfläche können die berechneten Parameter, die an der untersuchten Oberfläche des Fügepartners ermittelt werden, anhand eines Regressionsmodells, insbesondere eines linearen Regressionsmodells, ermittelt werden. Das dabei verwendete Regressionsmodell wurde vorher anhand von Proben der gleichen Probenklasse mit vergleichbarem Aufbau und Eigenschaften, deren Haftfestigkeiten mit einem anderen Messverfahren bestimmt wurden, ermittelt, wobei alle Schritte der Merkmalsextraktion analog dem oben beschriebenen Verfahren durchgeführt wurden.

Im Fall der Verwendung der diskreten Wavelet-Transformation kann die Textur mindestens eines mit den Detektoren erfassten Bildes, insbesondere wiederkehrende Strukturen (Frequenzen), beschrieben werden. Die Wavelet-Transformation (WT) entspricht einer digitalen Filterung nach Hochpass- und Tiefpass-Frequenzen, wobei die Filterfunktion (Wavelet) variabel gewählt werden kann und der Frequenzgang richtungsabhängig ist. Somit ergibt die Durchführung der WT an Bildern oder bildhaften Darstellungen in vertikaler, horizontaler und diagonaler Richtung unterschiedliche Ergebnisse. Es kann eine Berechnung aller drei Richtungen separat erfolgen. Das Ergebnis wird durch die Tiefpass-Information (Wavelet-Koeffizienten) bestimmt und die restliche Information verworfen, jeder Bildpunkt repräsentiert dabei einen Wavelet-Koeffizienten, und alle Bildpunkte gemeinsam die Wavelet-Matrix. Zusätzlich wird bei Durchführung der WT die Ortsauflösung reduziert und Informationen abgetrennt. Das Abtrennen der Information bedeutet, dass für eine Anzahl von ursprünglich m Bildpunkten nach der WT noch *m\*0,5* Bildpunkte erhalten werden. Die WT kann mehrfach rekursiv durchgeführt werden. Dies kann in drei Stufen erfolgen, um Informationen zur Fein-, Mittelfein- und Grobstruktur der Bilder zu erhalten. Es sind aber auch mehr als oder weniger als drei Stufen möglich. Aus den Wavelet-Koeffizienten jeder WT können zur Beschreibung von Strukturen der Wavelet-Matrix bzw. deren bildhafter Abbildung weitere Parameter bestimmt werden, oft werden dabei die Wurzel der Quadratsumme der Koeffizienten der Wavelet-Matrix (Energie), die Entropie und die Grauwertematrix und davon abgeleitete Parameter genutzt.

Ein untersuchter Teilbereich sollte eine Größe im Bereich 500 $\mu$m $\times$ 500 $\mu$m bis 1500 $\mu$m $\times$ 1500 $\mu$m aufweisen. Es sollte eine Detektion mit einer Ortsauflösung im Bereich 0,5 $\mu$m bis 1,5 $\mu$m, bevorzugt bei 1 $\mu$m durchführbar sein.

In einer Reihe sollten dabei mindestens 30, bevorzugt mindestens 100 Detektoren angeordnet sein (Hyperspektral-Kamera).

In einer Spalte sollten mindestens eine, bevorzugt mindestens 50 Detektoren angeordnet sein.

Für eine erfindungsgemäße Anordnung kann eine Hyperspektral-Kamera mit geeigneten strahlungsformenden optischen Elementen und einer elektronischen Auswerteelektronik eingesetzt werden.

Die Bestrahlung der Fläche sollte mit mindestens einem Winkel im Bereich 0° bis < 90° in Bezug zur Normalen der Oberfläche auf die die elektromagnetische Strahlung auftrifft erfolgen. Bei einer Durchstrahlung mindestens eines für die elektromagnetische Strahlung transparenten Fügepartners sollte vorteilhaft der Winkel von zumindest nahezu 0° zur Probennormalen eingehalten sein, also die Strahlung möglichst senkrecht auf diese Oberfläche gerichtet werden, um den reflektierten Anteil so klein als möglich zu halten. Die Bestrahlung und Detektion kann auch bei veränderlichem Einfallswinkel der elektromagnetischen Strahlung durchgeführt werden. Wie bereits zum Ausdruck gebracht, können dabei Einfallswinkel im Bereich 0° bis maximal 89° gewählt werden.

Die Detektion kann sich auch auf linear polarisierte elektromagnetische Strahlung beschränken. In diesem Fall kann eine vorteilhafte Ausrichtung einer oder mehrerer Polarisationsebene(n) vor oder/und nach der bestrahlten Oberfläche gewählt werden.

Insbesondere bei Verwendung von Detektoren, die lediglich eine Linie simultan spektral und ortsaufgelöst messen können, können die Detektoren und die jeweiligen noch nicht stoffschlüssig miteinander verbundenen Fügepartner entlang mindestens einer Achse relativ und dabei bevorzugt in einem vorteilhaften Abstand zueinander bewegt werden. So kann bei statisch fixierten Detektoren und Strahlungsquelle eine, mit einem noch nicht stoffschlüssig verbundenen Fügepartner gebildete, Probe entlang einer Achse bewegt werden. Dies kann mit einem entsprechend beweglichen Tisch, auf dem eine solche Probe angeordnet ist, die in eine x- und ggf. auch in eine y-Richtung bewegt werden kann, erreicht werden. Es ist aber auch die Abwicklung von Rolle zu Rolle möglich, wenn die jeweilige Probe mit einem oder mehreren flexibel verformbaren Werkstoff(en) gebildet ist, und dabei beispielsweise in Form einer Folie vorliegt.

An der Strahlungsquelle können die elektromagnetische Strahlung formende Elemente vorhanden sein. In einer einfachen Ausführung kann die Strahlungsquelle mit einem Mikroskop kombiniert sein. Es kann aber auch eine Strahlungsquelle in einem Hohlkörper angeordnet sein, aus dem die elektromagnetische Strahlung diffus austritt und auf die zu bestrahlende Fläche gerichtet werden kann. Der Hohlkörper kann eine Kugel oder Zylinder sein. Es sollte eine gleichzeitig zu detektierende Fläche homogen bestrahlt werden können. Bei einer Strahlungsquelle mit strahlformenden optischen Elementen sollten bei der Auswahl der jeweils eingesetzten optischen Elemente, die zur Strahlformung dienen, der genutzte Wellenlängenbereich berücksichtigt werden.

Die Größe der zu untersuchenden Teilfläche und die notwendige Ortsauflösung kann durch den Einsatz von den Detektoren vorgelagert angeordneten, die elektromagnetische Strahlung formenden Elementen, beeinflusst werden. In einer einfachen Ausführung kann die Kamera oder Detektoranordnung mit einem Mikroskop oder einem telezentrischen Objektiv kombiniert eingesetzt werden.

Bevorzugt kann im Strahlengang der elektromagnetischen Strahlung eine den Einfall von gestreuter elektromagnetischer Strahlung vermeidende Blende vor den Detektoren angeordnet sein.

Von der Strahlungsquelle kann elektromagnetische Strahlung emittiert werden, deren Wellenlängenbereich im UV-Bereich beginnt und im IR-Bereich endet. Besonders bevorzugt ist Strahlung aus dem Wellenlängenbereich des sichtbaren Lichts bis in den NIR-Bereich also von 250 nm bis 1000 nm. Es sollten in einem genutzten Wellenlängenbereich für die Bestrahlung möglichst alle Wellenlängen innerhalb des jeweiligen Intervalls genutzt werden können. Die Grenzen sollten allein durch den Empfindlichkeitsbereich der eingesetzten Detektoren bezüglich ihrer Empfindlichkeit/Messgenauigkeit der mit Ihnen erfassbaren Intensitäten für die jeweiligen Wellenlängen und den optischen Eigenschaften der Strahlführungskomponenten vorgegeben sein. Bevorzugt sollten die Spektralbereiche verwendet werden, die die größte Varianz zwischen den Spektren der Proben zur Ermittlung der Haftfestigkeit aufweisen und einen möglichst kleinen Bestimmungsfehler aufweisen.

Es kann im Strahlengang auch mindestens ein Element, mit dem eine gezielte Wahl der Polarisation der elektromagnetischen Strahlung erreichbar ist, vorhanden oder darin integriert sein.

Eine Probe von stoffschlüssig miteinander verbundener Fügepartner kann auch ein Mehrschichtaufbau, mehrerer bevorzugt aus unterschiedlichen Materialien oder Werkstoffen gebildeten Schichten, sein. Das Grundmaterial der Probe kann eine Polymerfolie oder eine dünne Metall- oder Glasfolie auf die weitere dünne Polymer-, Keramik- oder Metallschichten in verschiedener Kombination aufgebracht sein können, sein. Eine Bestimmung der erreichbaren Haftfestigkeit kann auch für mehr als zwei stoffschlüssig zu verbindende Fügepartner erfolgen. Diese können dabei übereinander, beispielsweise in Form eines Stapels angeordnet sein. Wie bereits angesprochen, können Fügepartner durch Kleben stoffschlüssig verbunden sein. Dabei ist ein geeigneter Haftvermittler zwischen den stoffschlüssig verbundenen Oberflächen der Fügepartner vorhanden. Die stoffschlüssige Verbindung kann auch durch Schweißen, mit und ohne Zusatzwerkstoff ausgebildet worden sein. Es kann die erreichbare Haftfestigkeit auch für eine Lötverbindung bestimmt werden. Es kann aber auch eine Bestimmung der zu erwartenden Haftfestigkeit von Beschichtungen, wie z.B. Farbschichten, Kunststoffschichten auf Metall- oder Keramikoberflächen, Beschichtungen die mittels CVD- oder PVD-Verfahren ausgebildet werden, erfolgen.

Die eingesetzten Detektoren und die elektronische Auswerteeinheit sowie ggf. auch die Strahlungsquelle können ein so genanntes bildgebendes Hyperspektral-System darstellen, das bei der erfindungsgemäßen Anordnung genutzt werden kann. Dadurch können neben den spektralen auch Texturinformationen für den jeweils detektierten Teilbereich der Probe erhalten werden.

Vorteilhaft kann eine Reduzierung der Daten, die bei der Detektion an den einzelnen Ortspunkten ermittelten Intensitäten für die einzelnen Wellenlängen eines erfassten Wellenlängenbereichs (Spektrum) ermittelt wurden, bei der eigentlichen Auswertung sein. Dadurch kann eine für die Bestimmung der Haftfestigkeit relevante Information von der nicht relevanten abgetrennt werden, wodurch sich auch der elektronische Rechenaufwand erheblich reduziert und dadurch die erforderliche Zeit ebenfalls reduziert werden. Der Einsatz hochkomplexer, kostenintensiver elektronischer Rechentechnik ist nicht erforderlich.

Bei der Erfindung kann ein statistisches Modell erstellt werden, auf dessen Grundlage die erreichbare Haftfestigkeit der untersuchten Oberflächen eines und/oder beider Fügepartner im entsprechend zugrundeliegenden Teilbereich vorhergesagt werden kann. Dazu kann der Datensatz, der mit einem aus mehreren bevorzugt in Reihe angeordneten optischen Detektoren, mit denen eine wellenlängen- und ortsaufgelöste Erfassung von Intensitäten möglich ist, erfasst werden.

Die erreichbare Haftfestigkeit wird durch die Eigenschaften der untersuchten Oberflächen der Probe beeinflusst. Diese Eigenschaften können Partikel, Adsorbate, Schichtdicken, Materialien, Oberflächenrauheit, -topologie etc. sowie deren Verteilung über die jeweilige untersuchte Teilfläche sein. Ebenso bewirken diese probenspezifischen Eigenschaften, dass elektromagnetische Strahlung, die mit der Probe wechselwirkt, unterschiedlich (spektral, Intensität) reflektiert, gestreut bzw. transmittiert wird. Die Gesamtheit einer hinreichenden Anzahl einzelner wellenlängenaufgelöst erfassten Intensitäten (Spektren) von unterschiedlichen Ortspunkten einer detektierten Teilfläche einer Probe kann somit die Information über die zu erwartende Haftfestigkeit eines Fügepartners im betrachteten Probenbereich repräsentieren.

Für die Bestimmung der Haftfestigkeiten kann anhand eines gemessenen Merkmalssatzes unter Verwendung eines vorher mit an Proben der gleichen Probenklasse mit vergleichbarem Aufbau gemessenen Merkmalssätzen mit bekannten Haftfestigkeiten aufgestellten Regressionsmodells die Haftfestigkeit bestimmt werden.

Die gemessenen Merkmalssätze sind dazu einer Datenreduktion und somit einer Merkmalsextraktion zu unterziehen. So können die an den einzelnen Ortspunkten der jeweiligen Teilfläche detektierten Wellenlängenspektren einer spektralen Merkmalsextraktion, beispielsweise einer Clusteranalyse oder Hauptkomponentenanalyse unterzogen werden. Die im Regressionsmodell verwendeten Parameter können demzufolge die Anzahl und Verteilung der Cluster, die Scorewerte der Hauptkomponenten oder deren Verteilung sein.

Weiterhin können zur Merkmalsextraktion Methoden der Bildkompression für eine Texturbewertung herangezogen werden, bei der die an allen Ortspunkten der jeweiligen Teilfläche detektierten Intensitäten einzelner Wellenlängen oder die der Summe bzw. der gemittelten Summe der Intensitäten mehrerer Wellenlängen oder die durch eine spektrale Merkmalsreduktion bestimmten Parameter und/oder deren Kombinationen einer Bildkompression unterzogen werden. Zur Beschreibung der Texturinformation des Datensatzes sollte dabei mindestens ein Parameter über eine Wavelet-Transformation oder eine anderweitige Bildkompressionsmethode, wie beispielsweise Taylor Polynome, Fourier- und Kosinus-Transformationen, diskrete Kosinus-Transformation oder Grauwert-Matrix-Methode ermittelt werden.

Auf Grundlage eines Kalibriermodells (Regressionsmodell), das anhand gemessener Datensätze von Proben der gleichen Probenklasse mit vergleichbarem Aufbau und bekannter Haftfestigkeit erstellt wurde, kann die Haftfestigkeit von Teilflächen vorhergesagt werden, wobei die jeweils gemessenen Datensätze zur Kalibrierung und zur Vorhersage unter Verwendung identischer Schritte der Merkmalsreduktion behandelt werden. Beispielhaft kann dabei als Regressionsmodell eine "Multiple Lineare Regressionsanalyse" (MLRA), eine "Hauptkomponenten-Regression" (PCR), eine "Partielle kleinste Quadrat Regression" (PLS) oder ein "Neuronales Netz" eingesetzt werden.

Voraussetzungen für eine ausreichende Bestimmungsgenauigkeit sind eine homogene Beleuchtung der zur Detektion genutzten Fläche, so dass eine Überlagerung der durch die Probe bedingten Intensitätsschwankungen mit lateralen Schwankungen der Beleuchtungsintensität durch Realisierung eines lateral homogenen Lichtfelds vermieden werden kann. Für kleine Probenbereiche kann vorteilhaft eine Mikroskop-Optik eingesetzt werden. Die erfindungsgemäße Anordnung kann durch Einsatz unterschiedlicher Optiken, Arbeitsabstände und Vergrößerungen an die jeweilige zu detektierende Fläche der Probe angepasst werden.

Mit der Erfindung kann eine Bestimmung von erreichbaren Haftfestigkeiten von Proben innerhalb weniger Millisekunden bis Minuten statt Tagen durchgeführt werden. Es ist eine berührungslose, zerstörungsfreie Messung möglich. Die Proben müssen nicht zusätzlich behandelt oder anderweitig vorbereitet werden. Bevorzugt ist ein Einsatz in der Qualitätskontrolle und bei inline-Überwachungen der Produktion, so dass in diesen Fällen keine Probenentnahme und gesonderte Bestimmung erforderlich sind.

Nachfolgend soll die Erfindung beispielhaft näher erläutert werden.

Dabei zeigt:

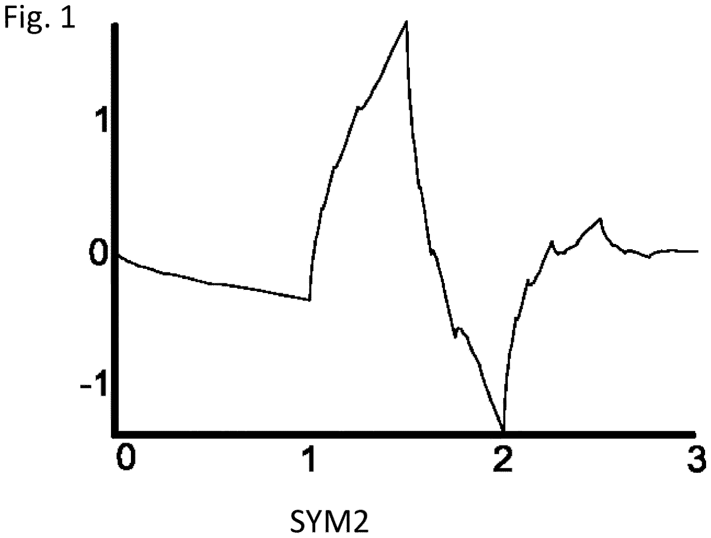

Figur 1  eine Wavelet-Transformation unter Verwendung des "Sym2"-Wavelets und

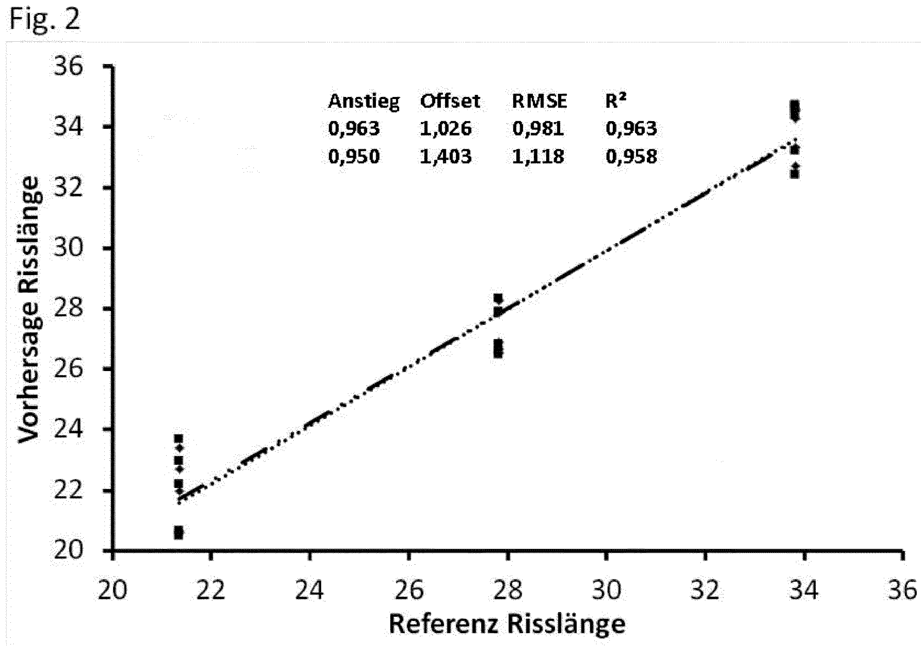

Figur 2  ein erstelltes Regressionsmodell zur Vorhersage der Risslänge im Keiltest nach DIN 65448; mit dem aus der Risslänge die erreichbare Haftfestigkeit berechnet werden kann.

Beispiel 1

Probenbleche aus einer Titan-Legierung, die durch einen Plasmaprozess mit rund 100 nm Siliziumdioxid beschichtet wurden, werden auf einer ausgewählten Fläche von 2 mm * 10 mm in fünf Teilflächen eingeteilt und mit einer Halogenlampe als Lichtquelle, homogen bestrahlt. Oberhalb der Probe waren insgesamt 1000 × 150 optische Detektoren in einer Reihen-Spaltenanordnung angeordnet und mit einer Optik (hier ein Mikroskop) kombiniert, so dass mit einer Breite von 2 mm die gesamte Probenfläche wellenlängen- und ortsaufgelöst erfasst werden konnte. Mit den optischen Detektoren wurde für einzelne Ortspunkte eine wellenlängenaufgelöste Erfassung der Intensitäten des von der Probe reflektierten Lichtes realisiert. Es wurden insgesamt 150 Wellenlängen im Bereich 400 nm bis 1000 nm berücksichtigt. Die Probe wurde dabei senkrecht zur Reihenanordnung der Detektoren bewegt, um die gesamte Probenfläche zu erfassen.

Die für die einzelnen Ortspunkte mit den Detektoren wellenlängenaufgelöst erfassten Intensitäten wurden zu Teilbereichen der Probe mit jeweils einer Größe von 2 mm * 2 mm entsprechend zugeordnet und bilden einen Hypercube.

Anschließend erfolgte für den jeweiligen Teilbereich eine Datenreduzierung, bei der wie folgt beschrieben, schrittweise vorgegangen worden ist:

1. Mittelwert-Glättung (gleitender Durchschnitt) der Spektren

2. Hauptkomponentenanalyse des Hypercubes des Teilbereichs. Dadurch wird eine Verringerung der Dimensionalität des gemessenen Datensatzes erreicht ohne, dass wichtige Informationen verloren gehen. Dazu wurden 2 Hauptkomponenten ausgewählt, so dass 2 Score-Bilder erhalten werden. Anschließend erfolgte für den jeweiligen Teilbereich eine diskrete Wavelet-Transformation, bei der in Schritten, wie folgt beschrieben, vorgegangen worden ist:

3. Pro Score-Bild erfolgte die Durchführung der Wavelet-Transformation in drei Richtungen (horizontal, vertikal, diagonal) und in je drei Stufen (Fein-, Mittel-, Grobstruktur) unter Verwendung des "Sym2"-Wavelets für alle Transformationen = 9 Transformationen pro Score-Bild.

4. Berechnung von Parametern der Wavelet-Transformationen

    a. Energie (Quadratsumme der Koeffizienten der Wavelet-Matrix)

$$\text{Energie} = \sqrt{\sum_{i,j} p(i,j)^2}$$

mit p(i,j), Koeffizient der Wavelet-Matrix an der Position (i,j).

    b. (Shannon)Entropie

$$\text{Entrophy} = -\sum h * log_2(h)$$

mit h, Werte der Histogramm-Klassen

    c. Grauwertematrix

        i. Energie (Maß für die Gleichförmigkeit)

$$\sum_{i,j} p(i,j)^2$$

        ii. Kontrast (Maß für die Varianz)

$$\sum_{i,j} |i-j|^2 \, p(i,j)$$

        iii. Korrelation (Abhängigkeit der Bildpunkte)

$$\sum_{i,j} \frac{(i-\mu i)(j-\mu j)p(i,j)}{\sigma_i \sigma_j}$$

        iv. Homogenität (Maß für Monotonie)

$$\sum_{i,j} \frac{p(i,j)}{1+|i-j|}$$

    mit p(i,j), Koeffizient der Wavelet-Matrix an der Position (i,j); $\mu$ Erwartungswert; und $\sigma$ Standardabweichung.

Anschließend erfolgte anhand des vorab, unter Verwendung von Datensätzen von Teilflächen mit bekannter Haftfestigkeit und einer Datenbehandlung analog der in den Schritten 1-4 beschriebenen Form, erstellten und im elektronischen Speicher der elektronischen Auswerteeinheit hinterlegten Regressionsmodells eine Bestimmung der erreichbaren Haftfestigkeit der untersuchten Probe.

**Patentansprüche**

1.   Anordnung zur Bestimmung der erreichbaren Haftfestigkeit vor Ausbildung einer stoffschlüssigen Verbindung an einer Oberfläche eines Fügepartners, welche Anordnung eine breitbandige Strahlungsquelle, mehrere Detektoren und eine Auswerteeinheit umfasst,

    wobei die mehreren Detektoren zur ortsaufgelösten spektralen Analyse elektromagnetischer Strahlung innerhalb eines Wellenlängenintervalls ausgebildet sind, in einer Reihen oder einer Reihen- und Spaltenanordnung angeordnet und mit der elektronischen Auswerteeinheit verbunden und so angeordnet sind, dass von der breitbandigen Strahlungsquelle emittierte elektromagnetische Strahlung entweder nach einer Reflexion an der Oberfläche eines der Fügepartner, einer auf der Oberfläche eines Fügepartners ausgebildeten Schicht, mit der die stoffschlüssige Verbindung ausgebildet wird, und/oder nach dem Durchstrahlen der für die elektromagnetische Strahlung transparenten Fügepartner auf die Detektoren auftrifft, wobei die breitbandige Strahlungsquelle so ausgebildet ist, dass auf einer Fläche des Fügepartners, von der die elektromagnetische Strahlung reflektiert oder durch die Fläche transmittiert wird, eine lateral und zeitlich homogene Intensität der elektromagnetischen Strahlung eingehalten ist, und die Strahlung nicht 100 %-ig absorbiert und so eine mindestens 2%-ige Transmission und/oder Reflexion der elektromagnetischen Strahlung erreicht ist/sind und die elektronische Auswerteeinheit so ausgebildet ist, dass die orts- und wellenlängenaufgelöst erfassten Messsignale der Detektoren innerhalb eines Wellenlängenintervalls für einzelne Ortspunkte, die auf einer vorgebbaren Fläche der Fügepartner angeordnet sind, erfasst sind und dabei an mehreren Positionen erfasste Messsignale jeweils einem Teilbereich der detektierten Fläche (Hypercube) zugeordnet sind und für alle wellenlängenaufgelöst erfassten Messsignale der Teilbereiche der detektierten Fläche eine Datenreduzierung durchgeführt ist, bei der aussagekräftige Merkmale selektiert werden und anhand dieser selektierten Merkmale mit in einem elektronischen Speicher abgelegten vorab ermittelten Regressionsmodell, das anhand der in analoger Weise erhaltenen Merkmalssätze von miteinander stoffschlüssig verbundenen Fügepartnern, deren Haftfestigkeiten vorher an Proben mit einem anderen Messverfahren ermittelten Haftfestigkeiten ermittelt worden sind, so dass die Auswerteeinheit eine Aussage über eine dementsprechende erreichbare Haftfestigkeit erzielt.

2. Anordnung nach Anspruch 1, **dadurch gekennzeichnet, dass** die elektronische Auswerteeinheit so ausgebildet ist, dass eine Datenreduzierung durch Merkmalsextraktion mittels Hauptkomponentenanalyse, Extraktion von Texturinformationen, Mittelwertbildung, Bestimmung der Standardabweichung und/oder Kombinationen davon erreichbar ist.

3. Anordnung nach einem der vorhergehenden Ansprüche, **dadurch gekennzeichnet, dass** der jeweilige Teilbereich eine Größe im Bereich 500 μm * 500 μm bis 1500 μm * 1500 μm oder 2 mm * 2 mm aufweist.

4. Anordnung nach einem der vorhergehenden Ansprüche, **dadurch gekennzeichnet, dass** die Bestrahlung der Fläche mit mindestens einem Winkel im Bereich 0 ° bis < 90° in Bezug zur Normalen der Oberfläche des bestrahlten Fügepartners erfolgt.

5. Anordnung nach einem der vorhergehenden Ansprüche, **dadurch gekennzeichnet, dass** die Detektion und Auswertung unter Verwendung mindestens eines Polarisators mit mindestens einer definierten bekannten Polarisationsebene in Bezug zur Einfallsebene durchführbar ist.

6. Anordnung nach einem der vorhergehenden Ansprüche, **dadurch gekennzeichnet, dass** die Detektoren und die stoffschlüssig verbundenen Fügepartner entlang mindestens einer Achse relativ und dabei bevorzugt in einem konstanten Abstand zueinander bewegbar sind.

7. Anordnung nach einem der vorhergehenden Ansprüche, **dadurch gekennzeichnet, dass** die Strahlungsquelle die elektromagnetische Strahlung formende optische Elemente aufweist oder eine elektromagnetische Strahlung diffus auf die Fläche emittierende Strahlungsquelle, die insbesondere innerhalb eines Hohlkörpers angeordnet ist und besonders bevorzugt im Strahlengang der elektromagnetischen Strahlung eine, den Einfall von gestreuter elektromagnetischer Strahlung vermeidende Blende vor den Detektoren angeordnet ist.

8. Anordnung nach einem der vorhergehenden Ansprüche, **dadurch gekennzeichnet, dass** die stoffschlüssig zu verbindenden Fügepartner einen Mehrschichtaufbau bilden, der bevorzugt mit mehreren aus unterschiedlichen Materialien oder Werkstoffen gebildeten Schichten gebildet ist.

9. Anordnung nach einem der vorhergehenden Ansprüche, **dadurch gekennzeichnet, dass** die Reihen- und Spaltenanordnung von Detektoren mit optischen Elementen und Auswerteelektronik mit einer HSI-Kamera gebildet ist.

**Claims**

1. An arrangement for determining the achievable adhesive strength before forming an integrally bonded connection at a surface of a joining partner, which arrangement comprises a broadband radiation source, a plurality of detectors and an evaluation unit,

   wherein the plurality of detectors are configured for a spatially resolved spectral analysis of electromagnetic radiation within a wavelength interval, are arranged in a row or a row and column arrangement, and are connected to the electronic evaluation unit and are arranged such that electromagnetic radiation emitted by the broadband radiation source impacts the detectors either after a reflection at the surface of one of the joining partners, a layer which is formed on the surface of a joining partner and with which the integrally bonded connection is formed, and/or after the irradiation of the joining partners transparent for the electromagnetic radiation, wherein the broadband radiation source is formed such that, on a surface of the joining partner from which the electromagnetic radiation is reflected or transmitted through the surface, an intensity of the electromagnetic radiation that is homogeneous laterally and in time is maintained, and the radiation is not absorbed 100%, and so an at least 2% transmission and/or reflection of the electromagnetic radiation is/are achieved and the electronic evaluation unit is formed such that the measurement signals detected by the detectors with spatial and wavelength resolution are detected within a wavelength interval for individual local points arranged on a predefinable surface of the joining partners, and measurement signals detected at several positions are in each case associated with a partial region of the detected surface (hypercube) and
a data reduction is carried out for all measurement signals of the partial regions of the detected surface detected with wavelength resolution and in this process significant features are selected and
on the basis of these selected features with previously determined regression model, which is stored in an electronic memory and which has been determined on the basis of the feature sets obtained in an analogous manner of joining partners connected to one another in an integrally bonded manner, the adhesive strengths of which were determined previously on samples using a different measurement method, the evaluation unit makes a prediction about a corresponding achievable adhesive strength.

2. The arrangement according to claim 1, **characterized in that** the electronic evaluation unit is formed such that a data reduction is achievable by feature extraction by principal component analysis, extraction of texture information, mean value formation, determination of the standard deviation and/or combinations thereof.

3. The arrangement according to any one of the preceding claims, **characterized in that** the respective partial region has a size in the range of 500 $\mu$m * 500 $\mu$m to 1500 $\mu$m * 1500 $\mu$m or 2 mm * 2 mm.

4. The arrangement according to any one of the preceding claims, **characterized in that** the surface is irradiated with at least an angle in the range of 0 ° to < 90° in relation to the normal of the surface of the irradiated joining partner.

5. The arrangement according to any one of the preceding claims, **characterized in that** the detection and evaluation may be carried out using at least one polarizer with at least one defined known polarization plane in relation to the plane of incidence.

6. The arrangement according to any one of the preceding claims, **characterized in that** the detectors and the joining partners connected in an integrally bonded manner are movable along at least one axis relative to one another and at the same time preferably at a constant distance from one another.

7. The arrangement according to any one of the preceding claims, **characterized in that** the radiation source has optical elements that shape the electromagnetic radiation or a radiation source that emits electromagnetic radiation diffusely onto the surface, which radiation source is arranged in particular within a hollow body and, particularly preferably in the beam path of the electromagnetic radiation, a diaphragm that avoids the incidence of scattered electromagnetic radiation is arranged in front of the detectors.

8. The arrangement according to any one of the preceding claims, **characterized in that** the joining partners to be connected in an integrally bonded manner form a multi-layer structure, which is preferably formed with a plurality of layers formed from different materials or substances.

9. The arrangement according to any one of the preceding claims, **characterized in that** the row and column arrangement of detectors with optical elements and evaluation electronics is formed with an HSI camera.

**Revendications**

1. Dispositif permettant de déterminer l'adhérence pouvant être atteinte avant la formation d'une liaison par complémentarité de matière au niveau d'une surface d'un partenaire d'assemblage, ledit dispositif comprenant une source de rayonnement à large bande, plusieurs détecteurs et une unité d'évaluation,

dans lequel les plusieurs détecteurs sont conçus pour une analyse spectrale spatialement résolue d'un rayonnement électromagnétique au sein d'une plage de longueurs d'onde, sont agencés en rangées ou en rangées et colonnes et
sont reliés à l'unité d'évaluation électronique et agencés au niveau de celle-ci de sorte que le rayonnement électromagnétique émis par la source de rayonnement à large bande frappe les détecteurs après la réflexion, à la surface d'un des partenaires d'assemblage, d'une couche réalisée sur la surface d'un partenaire d'assemblage et avec laquelle la liaison par complémentarité de matière est constituée, et/ou après l'irradiation du partenaire d'assemblage transparent au rayonnement électromagnétique,

dans lequel la source de rayonnement à large bande est conçue de sorte qu'une intensité latéralement et temporellement homogène du rayonnement électromagnétique est maintenue sur une surface du partenaire d'assemblage à partir de laquelle le rayonnement électromagnétique est réfléchi ou transmis à travers la surface, et

le rayonnement n'est pas absorbé à 100 % et une transmission et/ou une réflexion du rayonnement électromagnétique d'au moins 2 % est/sont atteinte(s) et l'unité d'évaluation électronique est conçue de sorte que les signaux de mesure détectés, résolus spatialement et spectralement, des détecteurs sont détectés au sein d'une plage de longueurs d'onde pour des points spatiaux individuels agencés sur une surface prédéfinissable des partenaires d'assemblage, et des signaux de mesure détectés au niveau de plusieurs positions sont associés respectivement à une sous-région de la surface détectée (hypercube) et

une réduction des données est effectuée pour tous les signaux de mesure résolus en longueur d'onde des zones partielles de la surface détectée, des caractéristiques significatives étant alors sélectionnées, et

lesdites caractéristiques sélectionnées, grâce à un modèle de régression préalablement déterminé, stocké dans une mémoire électronique et déterminé à l'aide des ensembles de caractéristiques, obtenus de manière analogue, de partenaires d'assemblage reliés entre eux par complémentarité de matière et dont les adhérence ont été déterminées préalablement sur des échantillons présentant des adhérences déterminées grâce à un autre procédé de mesure, permet à l'unité d'évaluation d'obtenir une proposition quant à l'adhérence pouvant être atteinte de manière correspondante.

2. Dispositif selon la revendication 1, **caractérisé en ce que** l'unité d'évaluation électronique est conçue de sorte qu'une réduction de données peut être obtenue par extraction de caractéristiques au moyen d'une analyse de composants principaux, d'une extraction des informations de texture, d'une détermination de valeur moyenne, d'une détermination de l'écart type et/ou de combinaisons desdits procédés.

3. Dispositif selon l'une quelconque des revendications précédentes, **caractérisé en ce que** la sous-région respective présente une taille située dans la plage comprise entre 500 $\mu$m * 500 $\mu$m et 1500 $\mu$m * 1500 $\mu$m ou 2 mm * 2 mm.

4. Dispositif selon l'une quelconque des revendications précédentes, **caractérisé en ce que** l'irradiation de la surface s'effectue avec au moins un angle situé dans la plage comprise entre 0° et < 90° par rapport à la normale de la surface du partenaire d'assemblage irradié.

5. Dispositif selon l'une quelconque des revendications précédentes, **caractérisé en ce que** la détection et l'évaluation peuvent être effectuées en utilisant au moins un polariseur muni d'au moins un plan de polarisation défini connu par rapport au plan d'incidence.

6. Dispositif selon l'une quelconque des revendications précédentes, **caractérisé en ce que** les détecteurs et les partenaires d'assemblage reliés par complémentarité de matière peuvent être déplacés le long d'au moins un axe les uns par rapport aux autres et de manière préférée à une distance constante les uns par rapport aux autres.

7. Dispositif selon l'une quelconque des revendications précédentes, **caractérisé en ce que** la source de rayonnement présente des éléments optiques de formation du rayonnement électromagnétique ou une source de rayonnement émettant un rayonnement électromagnétique de manière diffuse sur la surface et agencée en particulier à l'intérieur d'un corps creux, et un diaphragme évitant l'incidence du rayonnement électromagnétique diffusé est agencé en amont des détecteurs, de manière préférée sur le trajet du rayonnement électromagnétique.

8. Dispositif selon l'une quelconque des revendications précédentes, **caractérisé en ce que** les partenaires d'assemblage à relier par complémentarité de matière forment une structure multicouche formée de manière préférée grâce à plusieurs couches formées de matières ou de matériaux différents.

9. Dispositif selon l'une quelconque des revendications précédentes, **caractérisé en ce que** l'agencement en rangées et colonnes est constitué de détecteurs comprenant des éléments optiques et d'une électronique d'évaluation comprenant une caméra HSI.

Fig. 1

SYM2

Fig. 2

| | Anstieg | Offset | RMSE | R² |
|---|---|---|---|---|
| | 0,963 | 1,026 | 0,981 | 0,963 |
| | 0,950 | 1,403 | 1,118 | 0,958 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2138830 A2